# EUROPEAN PATENT SPECIFICATION

(11) **EP 3 958 511 B1**
(45) Date of publication and mention of the grant of the patent: **07.06.2023**
(21) Application number: 20191690.5
(22) Date of filing: 19.08.2020
(51) Int. Cl.: H04L 43/08, H04J 3/06

(54) **A WIRELESS CONFERENCE SYSTEM WITH EARLY PACKET LOSS DETECTION**
DRAHTLOSES KONFERENZSYSTEM MIT FRÜHERKENNUNG VON PAKETVERLUSTEN
SYSTÈME DE CONFÉRENCE SANS FIL AVEC DÉTECTION PRÉCOCE DE PERTE DE PAQUETS

(43) Date of publication of application: 23.02.2022
(73) Proprietor: Televic Conference NV, 8870 Izegem (BE)
(72) Inventor: Van Parys, Hans, 8200 Sint-Andries Brugge (BE); Deronne, Sébastien, 9100 Sint-Niklaas (BE)
(74) Representative: IP HILLS NV

(56) References cited:
- US-A1- 2015 201 289
- US-A1- 2017 070 547

## Description

### Field of the Invention

The present invention generally relates to a wireless conference system as used in a conference room to enable multiple users to participate to a conference. Such conference system typically comprises a central access point under control of the host or chairperson of the conference, and multiple conference units for the users installed on or integrated in the user desks present in the conference room. The present invention more particularly concerns the latency sensitive, bi-directional audio transmission between the conference units and the access point in such conference system.

### Background of the Invention

Conference rooms are often equipped with conference systems enabling a large number of users, for instance tens up to hundreds of users, to participate to a single conference. A wireless conference system typically comprises a central access point and multiple conference units coupled to the central access point. A separate conference unit may for instance be provided for each user, or a conference unit may be shared by two users at neighbouring seats in the conference room. Each conference unit typically has a microphone connector enabling to connect a microphone, for instance a gooseneck microphone, a built-in loudspeaker, and one or several headphone connectors enabling to connect headphones. Each conference unit further has a controller, a data processor and a transceiver configured for wireless, bi-directional data transfer with a similar transceiver in the central access point. The transceiver of a conference unit comprises a transmitter able to upstream transmit digital data packets to the receiver that forms part of the transceiver in the central access point. Similarly, the transceiver of the central access point comprises a transmitter able to downstream transmit digital data packets to the receiver(s) that form(s) part of the transceiver(s) of the conference unit(s). In a typical situation wherein a single participant is speaking while the other participants are listening, the audio captured by the microphone of the conference unit as a result of a person speaking, is digitized, packetized, and upstream transmitted to the central access point. The access point processes the received audio packets, for example mixing with other audio input sources, and downstream distributes the processed audio to all other conference units in the meeting room wherein the receiver shall receive the audio and the processor shall process the received audio packets for playout via headphones. This includes downstream transmission of the audio to the originating conference unit where the audio packets were received from such that the speaking person can hear his/her own speech via headphones.

The wireless, bidirectional communication of audio between conference units and an access point is subject to low latency requirements, sometimes called real-time requirements. Depending on the applicable quality norm, the end-to-end latency on the round trip time (RTT), i.e. the maximum delay for an audio packet to travel back and forth between a conference unit and the central access point including all processing in the conference unit and central access point, in conference systems may for instance be limited to a value in the range from 10 milliseconds up to 30 milliseconds, for example 15 milliseconds. An audio packet that arrives later than the maximum acceptable delay will not be used for playout. When an audio packet does not arrive in time (packet loss), the lost packet will be replaced by a packet that is determined through a packet loss concealment algorithm to avoid audible artefacts, noticeable by the conference participant(s) whose conference unit did not receive the audio packet in time. In order to enable such packet loss concealment algorithm to timely generate the replacement packet, it is important that packet loss is detected as early as possible.

In an example conference system, the audio packets are transferred in timeslots of a TDMA frame over a Wi-Fi connection between the conference unit and central access point. The TDMA frame may for instance have a length of 5 milliseconds subdivided in 10 timeslots each having a length of 500 microseconds. The conference unit shall capture 5 milliseconds of audio, typically speech by a conference participant, digitize the 5 milliseconds of audio into a digital audio packet, and transmit this digital audio packet in a single timeslot of a TDMA frame. The packet generation in this example already introduces 5 milliseconds of delay. In case soft TDMA is applied to avoid interference with other users of the channel, i.e. a TDMA scheme wherein timeslots are fixedly assigned to transceivers but wherein transceivers listen to the channel for interfering traffic within the timeslot to determine if the channel is free before transmitting data in such timeslot, the soft TDMA introduces a variable delay or jitter, the so-called Listen-Before-Talk jitter or LBT jitter. The interrupt mechanisms that control the data packet processing at the transmitter side and receiver side, the packet and audio processing time the propagation time of the data packet through the wireless channel, and any synchronization inaccuracies between transmitter and receiver introduce further delays that, in combination with LBT jitter may amount up to 2 milliseconds for single direction transmission. The single direction latency experienced by an audio packet in a conference system implementing a soft TDMA scheme with TDMA frame length of 5 milliseconds may thus amount up to 7 milliseconds.

A straightforward way to detect packet loss in order to initiate packet loss concealment relies on sequence numbering of the digital audio packets. A packet is then assumed lost when the audio packet with a following sequence number is received by the receiver. When relying on sequence numbering, the earliest moment whereon loss of a data packet can be detected however is the point in time whereon the next data packet is received. In order to generate and transmit the next audio packet, at least another 5 milliseconds will have lapsed in the above example with TDMA frames of 5 milliseconds, leaving insufficient time for the receiver to apply packet loss concealment and generate a replacement packet for a previous, lost audio packet.

A solution to enhance the detection of packet loss relying on sequence numbering of audio packets, could be found in reducing the TDMA frame length and consequently in reducing the length of an audio segment embedded in a single audio packet. Reducing the packet length however has a negative impact on the capacity of the wireless channel. The overhead/payload ratio increases as a result thereof as it may be assumed that the overhead per packet remains constant, and consequently the effective capacity of the wireless link shall decrease. In addition, the packet processing speed must increase when packets are shortened, requiring more expensive processors.

United States Patent Application US 2015/0201289 A1, entitled "Method and Apparatus for Rendering Audio in Wireless Hearing Instruments", recognizes the problem of audio packet loss over a wireless communication link in a different application, more precisely the application of hearing instruments worn on one or both sides of a person's head to assist a patient suffering hearing loss. As is described in par. [0030] of US 2015/0201289 A1, packets may be resent from the audio source device in an effort to improve the overall packet error rate performance of the wireless link. The retransmissions happen as a result of the audio source device failing to receive an acknowledgment from the audio sink device, or they can be sent unconditionally with a number of retransmissions. The suggestion to send acknowledgements and retransmissions indicates that the latency constraints in the application of hearing instruments are less stringent than in conference systems. The quality constraints of conference systems, as illustrated by the above example, do not allow retransmissions. Paragraphs [0029] and [0031] of US 2015/0201289 A1 further describes that link layer information shared between the radio of the wireless communication circuit and the DSP (Digital Signal Processor) of the processing circuit can be used to determine a packet concealment strategy. The TDMA mechanism deployed by the radio has inherent good timing mechanisms that allow to schedule packet arrivals. In case a scheduled receiving event takes place without a received packet, the radio will inform the DSP of the missing packet to allow the DSP to insert a packet loss concealment frame of information.

United States Patent Application US 2019/0104423 A1, entitled "Ultra-Low Latency Audio over Bluetooth" recognises the problem of low latency requirements for audio packets being transferred over a wireless connection in a different application, more precisely the application of audio-over-Bluetooth transfer between a device and a wireless headset or wireless ear buds. Also US 2019/0104423 A1 relies on acknowledgements and retransmissions, and teaches to reduce the latency for wireless audio packet transmission by enhancing the acknowledgement through combining BTC (Bluetooth Classic) packets and BLTE (Bluetooth Low Energy) packets within a single Bluetooth frame, by limiting the number of retransmissions and packet concealments per frame cycle to an upper limit, and by using time-efficient audio coding and decoding implementing FEC (Forward Error Correction) such as RS (Reed-Solomon). This is for instance described in paragraph [0005] of US 2019/0104423 A1.

It is an object of the present invention to disclose embodiments of a conference system that resolve or mitigate one or several of the above-mentioned drawbacks of existing solutions. More particularly, it is an object of the present invention to disclose embodiments of a conference system wherein audio packet loss as a result of wireless transfer between a conference unit and central access point or vice versa is detected faster thereby enabling faster initiation of packet concealment to allow the conference system to meet latency requirements and quality standards applicable for conference systems. It is a further object of the present invention to disclose such embodiments of a conference system without negatively affecting the wireless link's effective bandwidth.

### Summary of the Invention

According to embodiments of the invention, the above-defined object is achieved by the wireless conference system adapted to enable a plurality of users to participate to a conference in a conference room, as defined by claim 1, the wireless conference system comprising an access point and a plurality of conference units,
- wherein the access point and one or more of the conference units comprise a transceiver configured for bi-directional, time division multiple access based or TDMA based wireless communication of latency sensitive audio data packets between the one or more conference units and the access point, the transceiver comprising a transmitter and receiver;
- wherein the access point and said one or more conference units comprise respective clocks that are actively synchronised, a clock of the respective clocks being configured to generate a local audio clock signal used locally for processing the audio data packets and a local synchronisation clock signal used for the TDMA based wireless communication;
- wherein the receiver comprises a packet loss detection unit configured to detect loss of an audio data packet transmitted from a conference unit to the access point or vice-versa, the packet loss detection unit comprising:
   - means configured to determine an expected arrival time for the audio data packet from the local synchronisation clock signal and a predetermined expected transmission delay, and
   - means configured to detect that the audio data packet is lost if it has not arrived by the expected arrival time; and
- wherein the receiver comprises a packet loss concealment unit configured to generate a replacement packet for the audio data packet that is detected to be lost by the packet loss detection unit.

Thus, according to embodiments of the invention, the access point and one or more conference units are equipped with clocks or timers that are actively synchronized with high accuracy. As a consequence thereof, the receiver is aware of the transmit time of a data packet and the receiver can determine the expected arrival time of a data packet. As a result of the actively synchronized clocks, all transceivers know the start and end times of the TDMA frames and timeslots within these TDMA frames, up to some clock synchronization tolerance. The receiver consequently can derive from its local clock signal what the expected arrival time of an audio data packet is, namely the transmit time of that audio data packet plus an expected transmission delay. The transmit time is known from a synchronisation clock used by the transmitter and receiver for the TDMA based wireless communication. Indeed, each conference unit knows the TDMA schedule and its synchronisation clock allows to derive where they are in the TDMA frame. The expected transmission delay accounts for the overall time required for interrupt handling at the transmitter and receiver side, propagation of the audio data packet over the wireless link, jitter of various nature, and inaccuracies of various nature, and consequently represents an upper limit for the overall time between the data packet processor at the transmitter's side releasing the audio data packet for transmission and the data packet processor at the receiver's side receiving that same audio data packet for processing. If no data packet is received by the expected arrival time, packet loss concealment is activated at the receiver's side in order to produce a replacement packet.

As the transmission delay, i.e. the overall delay due to propagation, jitter, interrupt handling, processing and synchronisation inaccuracies, in conference systems is in the range of a few milliseconds, typically between 1 and 3 milliseconds for a single direction, the packet loss concealment in embodiments according to the invention can be initiated much faster than in known conference systems that rely on acknowledgements, packet retransmissions and time-outs at the receiver side for packet loss detection, or conference systems that rely on audio packet numbering and packet loss detection based on missing audio packet numbers at the receiver side. Faster initiation of packet loss concealment allows to reduce the overall end-to-end system latency, and the risk reduces that the packet loss concealment does not timely generate the replacement for insertion and playout of the audio stream, hence resulting in a reduced number of audible artefacts. Furthermore, embodiments of the conference system according to the invention do not require to reduce the TDMA frame length and/or the audio data packet length. Such measure would also enable a faster detection of packet loss and consequently a faster initiation of packet loss concealment at the price of an increased overhead/payload ratio and thus at the price of a reduced effective bandwidth (amount of useful data, i.e. audio samples, transferable per unit of time) of the wireless link.

A conference unit in the context of the current invention comprises any unit installed on or integrated in a user's desk in a conference room. Such conference unit typically comprises a built-in microphone array or an audio input connector like for instance a connector for a gooseneck microphone that can be used by a single user or can be shared between two users when the conference unit is installed in between the seats of two neighbouring users. The conference unit typically also comprises one or plural audio output connectors like a connector for headphones for one or plural users, and typically also comprises a built-in speaker. It is noticed that the audio input connector and audio output connector may also be integrated into a single connector. The conference unit may also comprise a connector for a camera or other sensors, may be equipped with a display and with physical or virtual (i.e. displayed) buttons to control the audio input (e.g. muting the microphone), to control the audio output (e.g. controlling the volume of headphones), to control other sensors, to interact with the chairperson (e.g. request to speak), and/or to serve as voting buttons. The conference unit further may comprise indicators, for instance coloured LEDs indicating to the chairperson, the user of the conference unit, and/or to other conference participants what the status of the conference unit is. The conference unit further has a processor for digitizing and packetizing audio captured by a microphone connected to its audio input connector, and a wireless transmitter for transmitting audio data packets to a central unit, the so-called access point. The conference unit also has a receiver for receiving audio data packets from the central unit, a processor for de-packetizing the received audio data packets and producing an (analogue or digital) audio stream sourced via the audio output connector. The transmitter and receiver jointly form a transceiver for bi-directional communication with the central unit. The processor generating the audio data packets for transmission and the processor processing the received audio data packets may be integrated to form a single physical processor.

An access point in the context of the current invention constitutes a central unit, managed and controlled by a chairperson or conference organisation. The access point provides bi-directional wireless communication with all conference units in the conference room in a TDMA-based manner. The access point thereto comprises a transmitter and receiver that respectively transmit and receive audio packets in timeslots of a TDMA frame. Audio data packets received in different timeslots originate from different conference units. The access point typically has a processor to process the received audio data packets from different conference units, to select or combine (generally process) the audio packets from one or plural conference units into a single audio stream for transmission by its transmitter to the conference units. The access point thereto may receive input from a chairperson who controls the conference and decides at any point in time which conference participants are allowed to speak. In addition to the conference units, the audio stream also may be provided to interpreter units in order to enable an interpreter or translator to upload an interpretation or translation of the audio stream that is further distributed by the central access point to the conference units.

A wireless conference system in the context of the present invention comprises the set of conference units installed in a conference room and the access point where these conference units connect to in a multipoint-to-point fashion through a wireless, bi-directional link which is shared in a TDMA-based manner.

Packet loss concealment in the context of the present invention comprises any algorithm or technology that generates audio samples in replacement for a lost audio packet, i.e. an audio data packet that never arrives at the receiver or that arrives late at the receiver as a result of which it can no longer be processed and timely integrated in the audio stream. Packet loss concealment techniques typically use the recently received audio packet(s) to generate a replacement packet for the lost audio data packet. Packet loss concealment techniques typically strive at avoiding or minimizing audible effects as a result of the replacement, and may for instance be based on frequency or tonality of recent audio samples.

In embodiments of the wireless conference system according to the invention, as defined by claim 2, the access point and the one or more conference units are configured to not acknowledge receipt of audio data packets.

Indeed, preferred embodiments of the wireless conference system according to the invention implement a protocol without receipt acknowledgements for audio data packets, or with receipt acknowledgement being deactivated. Acknowledgements or the absence thereof will trigger retransmissions, but any attempt to recover a lost audio data packet through retransmission will delay the activation of packet loss concealment and therefore increase the overall latency of the wireless conference system.

In embodiments of the wireless conference system according to the invention, as defined by claim 3, the access point and the one or more conference units are configured to not retransmit a lost audio data packet.

Indeed, preferred embodiments of the wireless conference system according to the invention implement a protocol without retransmissions of audio data packets in the upstream and downstream directions. As explained here above, retransmission attempts will delay the activation of packet loss concealment and therefore increase the overall latency of the wireless conference system.

In embodiments of the wireless conference system according to the present invention, as defined by claim 4, the latency sensitive audio data packets have a round trip time latency limit of 25 milliseconds for wireless transfer from a conference unit to the access point, and wireless transfer from the access point to the conference unit.

Thus, embodiments of the wireless conference system may set a restriction of 25 milliseconds for the round-trip time of audio data packets. This restriction in other words sets the maximum acceptable delay for a conference participant between speaking in the microphone connected to his conference unit and hearing his/her own speech in headphones connected to that same conference unit. The skilled person shall appreciate that alternative embodiments of the wireless conference system according to the invention may implement any other round-trip time latency limit smaller than 25 milliseconds. Such alternative embodiments set a higher quality standard on the audio on the condition that underlying technology like packet loss concealment algorithms are able to meet the lower round trip time limit.

In embodiments of the wireless conference system according to the present invention, as defined by claim 5, the latency sensitive audio data packets have a round trip time latency limit of 15 milliseconds for wireless transfer from a conference unit to the access point, and wireless transfer from the access point to the conference unit.

Indeed, preferred embodiments of the wireless conference system set a restriction of 15 milliseconds for an audio data packet to travel back and forth between a conference unit and the central access point. The skilled person shall appreciate that round trip time limits below 15 milliseconds may as well be implemented, at the risk however that higher capacity data packet processors that are more expensive must be deployed, and/or shorter TDMA frames and shorter audio packet lengths must be implemented negatively impacting the effective bandwidth of the wireless link, in order to minimize the audible artefacts.

In embodiments of the wireless conference system according to the present invention, as defined by claim 6, the TDMA based wireless communication uses TDMA frames of 5 milliseconds.

Thus, preferred embodiments implement a TDMA frame with length of 5 milliseconds. This implies that audio data packets also comprise audio samples spanning 5 milliseconds. At a audio sampling rate of 48 kHz, this means each audio data packet comprises 240 audio samples. These 240 audio samples constitute the payload section of an audio data packet. In addition, the audio data packet comprises overhead. The skilled person shall appreciate that shorter TDMA frames and shorter audio data packets have a negative impact on the effective bandwidth of the wireless link: the payload section of an audio data packet will reduce whereas its overhead section shall remain constant. The skilled person shall further appreciate that longer TDMA frames and longer audio data packets may complicate the task of packet processors and packet loss concealment technology to timely produce the audio stream without audible artefacts. The preferred TDMA frame length of 5 milliseconds in other words is the result of trading-off effective bandwidth on the wireless link between conference units and access point versus quality standards to be met for conference systems.

In embodiments of the wireless conference system according to the present invention, as defined by claim 7, the transmitter is configured to listen for interfering traffic within an assigned timeslot within a TDMA frame before transmitting an audio data packet therein.

Indeed, preferred embodiments of the invention implement a so-called soft TDMA scheme wherein the timeslots that form part of a TDMA frame are fixedly assigned to conference units following a predefined scheme, but wherein the transmit time within each timeslot of a TDMA frame is flexibly determined by the conference units based on an LBT (Listen Before Talk) mechanism. The LBT mechanism brings the advantage that the wireless channel can be used simultaneously by different wireless systems, resulting in a more effective use of the overall available bandwidth of a wireless channel. The LBT mechanism on the other hand introduces jitter or uncertainty for the receiver in the arrival time of audio data packets, as the transmitter will transmit the audio data packet only after having established that a timeslot is not used by any other transmitter, either internal or external to the wireless conference system. The LBT jitter in conference systems typically resides in the order of 1 to 2 milliseconds.

In embodiments of the wireless conference system according to the invention, as defined by claim 8, the wireless communication uses Wi-Fi (IEEE 802.11).

Indeed, the Wi-Fi protocol serves well as wireless technology for connecting conference units with the central access point in a conference system. Wi-Fi has a reach that enables to cover the area of conference rooms with a single access point (or at most a few access points) and offers multiple channels or frequency bands to deal with interference.

In embodiments of the wireless conference system according to the present invention, as defined by claim 9, the one or more conference units comprise clock synchronization units, configured to actively synchronize their respective clocks with a clock in the access point based on a timestamp inserted in beacon messages regularly broadcasted by the access point.

Thus, a preferred way to implement active synchronisation between the clock of the access point and the clocks of the conference units relies on beacon messages regularly broadcasted by the access point. In case the access point relies on the Wi-Fi protocol, the beacon messages for instance may correspond to the messages wherein the access point regularly broadcasts its SSID in order to enable devices to detect presence of the access point and establish connectivity. In comparison with other messages, such beacon messages are typically transmitted at a lower modulation scheme, i.e. using a less complex constellation scheme and increased redundancy, such that these beacon messages are more robust: they have a larger range and reduced risk for being lost before reaching the receiver. Using beacon messages to convey a time value or timestamp between the access point and conference unit of a conference system thus makes the active clock synchronisation that is essential to the present invention, more robust. An additional advantage in case of Wi-Fi, is that the beacon messages transferred therein are backwards compatible with earlier flavours or versions of the Wi-Fi technology.

In embodiments of the wireless conference system according to the invention, as defined by claim 10, the predetermined expected transmission delay is determined as a sum of a propagation delay, jitter, an interrupt handling delay, processing delay, and clock synchronisation inaccuracy.

Indeed, the overall inaccuracy on the receipt time of an audio data packet in preferred embodiments comprises a first contribution resulting from the effective propagation through the air, typically in the order of 100 a 200 microseconds. The overall inaccuracy on the receipt time of an audio packet further may comprise a second contribution resulting from LBT jitter in embodiments wherein a soft TDMA scheme is implemented. This second contribution is substantial, typically in the range of 1 to 1,5 milliseconds for TDMA frames of 5 milliseconds. The overall inaccuracy on the receipt time of an audio packet further comprises third, fourth and fifth contributions, respectively resulting from the interrupt handling at the transmitter and receiver side, i.e. the processing of interrupts indicating that an event has occurred like for instance the receipt of a packet, resulting from the packet and audio processing time, and resulting from synchronisation inaccuracies between the transmitter clock and receiver clock that may depend on the active synchronisation mechanism deployed.

In embodiments of the wireless conference system according to the invention, as defined by claim 11, the jitter delay comprises a listen-before-talk jitter contribution.

As already explained here above, jitter of various nature may contribute to the overall inaccuracy on the receipt time of an audio packet. In case a soft TDMA scheme is applied, wherein the transmitter waits until the channel is free before transmitting in the scheduled timeslot, an important jitter contribution stems from the listen-before-talk behaviour of the transmitter.

In embodiments of the wireless conference system according to the invention, as defined by claim 12, the predetermined expected transmission delay is set at a value between 1,5 milliseconds and 2 milliseconds.

Tests have shown that in conference systems using Wi-Fi with a soft TDMA scheme with time frames of 5 milliseconds for communication between conference units and a central access point of a conference system, and using timestamps in Wi-Fi beacons for active synchronisation, an overall expected transmission delay set at 1,5 milliseconds allows to implement the present invention with substantial gain in the detection and early activation of packet loss concealment without sacrificing effective bandwidth on the wireless link.

According to a second aspect, as defined by claim 13, the present invention relates to a method for transfer of latency sensitive audio data packets between one or more conference units and an access point in a conference system adapted to enable a plurality of users to participate to a conference in a conference room, the method for transfer comprising bi-directional, time division multiple access based or TDMA based wireless communication of the audio data packets, the method further comprising:
- actively synchronizing respective clocks in the one or more conference units and the access point, a clock of the respective clocks being configured to generate a local audio clock signal used locally for processing the audio data packets and a local synchronisation clock signal used for the TDMA based wireless communication;
- detecting loss of an audio data packet transmitted from a conference unit to the access point or vice-versa, comprising:
   - determining an expected arrival time for the audio data packet from the local synchronisation clock signal and a predetermined expected transmission delay, and
   - detecting that the audio data packet is lost if it has not arrived by the expected arrival time; and
- generating a replacement packet for the audio data packet that is detected to be lost through packet loss concealment.

### Brief Description of the Drawings

Fig. 1 schematically shows an embodiment of the wireless conference system 100 according to the invention;
Fig. 2 is a functional block scheme of an embodiment of a conference unit 200 that forms part of an embodiment of the wireless conference system 100 according to the invention;
Fig. 3 is a functional block scheme of an embodiment of an access point 300 that forms part of an embodiment of the wireless conference system 100 according to the invention;
Fig. 4 is a pseudo flow diagram illustrating an embodiment of the method for transfer of latency sensitive audio data packets according to the invention; and
Fig. 5 shows an example embodiment of a suitable computing system 500 for performing one or several steps in embodiments of the invention.

### Detailed Description of Embodiment(s)

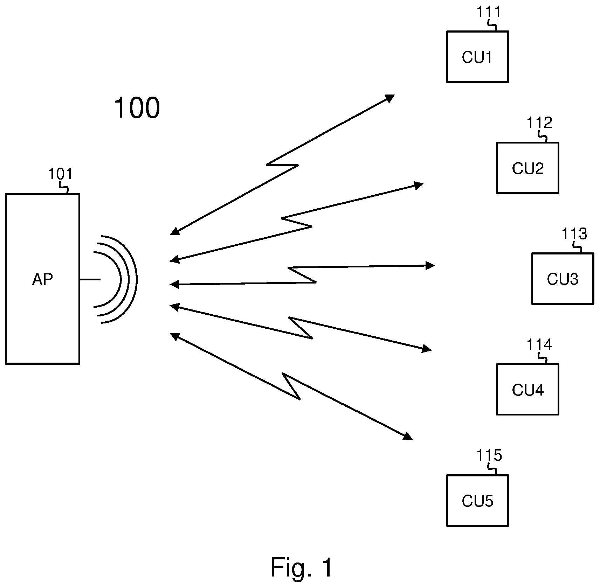

Fig. 1 shows a wireless conference system comprising an access point AP or 101 and five conference units CU1-CU5 or 111-115. The conference units 111-115 capture audio signals from respective conference participants using a microphone, digitize the audio signal into audio data packets, and transmit the audio data packets to the access point 101. The access point 101 receives audio packets from one or several conference units, processes the audio packets and generates new audio packets for distribution to all conference units 111-112 such that the conference units 111-115 receive an audio stream corresponding to the audio signal generated by a single, selected conference participant (the selection may be made by a chairperson controlling the access point 101), the combined audio signals generated by plural, selected conference participants (again, the selection may be made by a chairperson controlling the access point 101), or a processed audio signal like for instance an interpreted or translated audio signal, an interpretation or translation in overlay of the original audio signal, etc. In the embodiment of Fig. 1, the conference units 111-115 communicate wirelessly and bi-directionally with the access point 101 using Wi-Fi. The selected Wi-Fi channel for the upstream direction, i.e. the direction from the conference units 111-115 to the access point 101, is shared using a soft time division multiple access (TDMA) protocol. The soft TDMA protocol requires the transmitter in a conference unit to first listen whether the channel is free before transmitting in the assigned timeslot. The TDMA frame in the conference system 100 of Fig. 1 is assumed to have a length of 5 milliseconds. The TDMA frame comprises 10 timeslots of 0,5 milliseconds. If the channel is occupied, the transmitter will wait until the channel is free. This listen-before-talk or LBT mechanism introduces jitter, i.e. uncertainty on the arrival time of a packet at the access point 101 within the assigned timeslot. In the downstream direction, i.e. the direction from the access point 101 to the conference units 111-115, the audio data packets are also transmitted in timeslots of a TDMA frame. Typically, the same TDMA frame is used for up- and downstream transmission, and the same Wi-Fi channel is used for up- and downstream transmission. The transmitter in the access point 101 also implements the LBT mechanism to avoid interference with other Wi-Fi networks using the same channel.

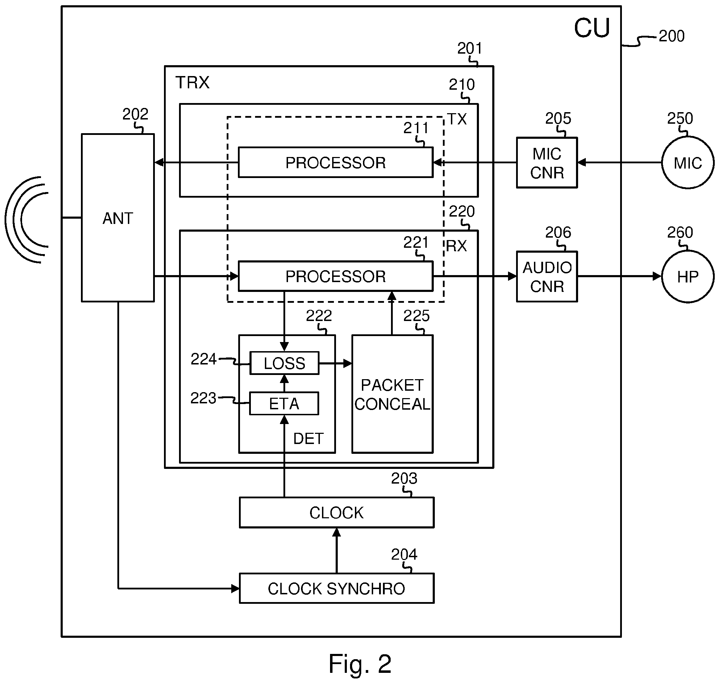

Fig. 2 shows the functional building blocks of a conference unit CU or 200 relevant in view of the present invention. The conference unit 200 of Fig. 2 represents a possible implementation of each of the conference units 111-115 drawn in Fig. 1. The conference unit 200 comprises a transceiver 201, an antenna 202 for wireless transmission, a clock 203, clock synchronization logic 204, an audio input connector or microphone connector 205, and an audio output connector or headphones connector 206. Fig. 2 further also schematically shows the microphone 250 connected to microphone connector 205 to capture audio signals, for instance speech from a conference participant, and the headphones 260 connected to the audio output connector 206 or built-in speaker to enable the conference participant to follow the conference conversation. The transceiver 201 comprises a transmitter 210 and receiver 220. The transmitter 210 comprises a processor 211 that is configured to receive the audio signal captured by microphone 250, to digitize this audio signal, and to packetize the digitized audio signal into audio data packets each containing 5 milliseconds of captured speech. The processor 211 forwards the generated audio data packets to the antenna 202, i.e. the radio interface that transmits the audio data packets in upstream direction to the access point of the conference system using the Wi-Fi protocol with soft TDMA and LBT mechanism as explained here above. In the downstream direction, the antenna 202 regularly receives Wi-Fi beacon messages from the access point it associates with. The beacon messages comprise a timestamp or time value that is used by the clock synchronisation unit 204 to synchronize the clock 203 with a clock in the access point. The clock signal, locally generated by clock 203 in conference unit 200 but actively synchronized with a clock in the access point through the beacon messages, is used by an estimated time of arrival unit 223 that estimates the time of arrival of the next audio data packet. As clock 203 is actively synchronized with the clock used in the access point for transmission of audio data packets, the ETA unit 223 can accurately determine the time the next audio data packet is ready for transmission at the access point. The ETA unit 223 increases that time with a predetermined transmission delay, i.e. an acceptable time required for interrupt handling at the transmitter and receiver side, propagation through the air over the Wi-Fi channel, and possible jitter as a result for instance of the LBT mechanism implemented at the transmitter side. The transmission delay may further account for clock synchronisation inaccuracies between clock 203 and the clock in the access point where it is actively synchronized with. In the example of Fig. 2, the transmission delay is predetermined to correspond to 1,5 milliseconds. The locally generated clock signal and predetermined transmission delay enable the ETA unit 223 to defensively estimate the arrival time of the next audio data packet. A loss detection unit 224 that receives an interrupt from processor 221 upon arrival of an audio data packet verifies if an audio data packet is received by the next estimated time of arrival of an audio data packet. If an audio data packet is received in time, the processor 221 shall process the received audio data packet such that the audio samples contained therein can be output as part of the audio stream via audio connector 206. Each time no audio data packet is received by the estimated time of arrival of an audio data packet, the loss detection unit 224 triggers a packet concealment unit 225 that forms part of receiver 220 to generate a replacement packet and to supply the replacement packet to the processor 221 for insertion in the audio stream outputted via audio connector 206. The packet concealment unit 225 applies processing intensive concealment algorithms, typically using earlier received audio data packets to generate a replacement audio data packet that, when inserted in the received audio stream to replace a missing audio data packet, does not generate audible artefacts. Thanks to the active clock synchronization and arrival time estimation of audio data packets, lost packet concealment can be triggered early. This enables the conference unit 200 to meet latency requirements set for conference systems, typically ranging between 15 milliseconds and 25 milliseconds for the round-trip time of audio packets travelling back and forth between the conference unit 200 and access point.

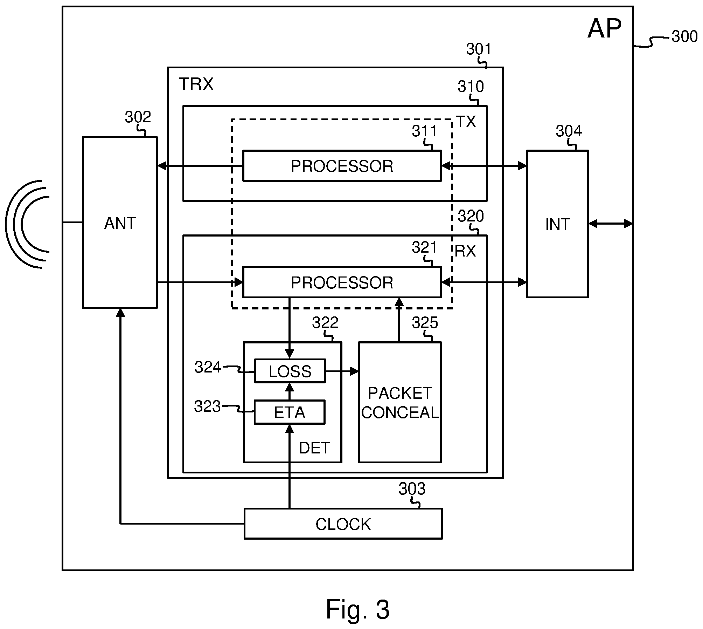

Fig. 3 shows the functional building blocks of an access point AP or 300 relevant in view of the present invention. The access point 300 of Fig. 3 represents a possible implementation of the access point 101 drawn in Fig. 1. The access point 300 comprises a transceiver 301, an antenna 302 for wireless transmission, a clock 303, and an interface 304 for the chairperson or organization of a conference. The transmitter 301 comprises a transmitter 310 and receiver 320. The transmitter 310 comprises a processor 311 that is configured to generate audio data packets each containing 5 milliseconds of audio. The content of these audio data packets is controlled by the chairperson of the conference through interface 304. The content of these audio data packets may for example be audio received from a single conference unit, audio received from plural conference units, audio received from an interpreter or translator, etc. The processor 311 forwards the generated audio data packets to the antenna 302, i.e. the radio interface that transmits the audio data packets in downstream direction to the conference units of the conference system using the Wi-Fi protocol with soft TDMA and LBT mechanism as explained here above. In the downstream direction, the antenna 302 also regularly transmits Wi-Fi beacon messages containing for instance an access point identifier to enable conference units to associate with the access point 300. These beacon messages also comprise a timestamp or time value from clock 303 enabling conference units to actively synchronise their clock with the clock 303 in the access point 300. The clock signal, locally generated by clock 303 in access point 300, is used by an estimated time of arrival unit 323 that estimates the time of arrival of the next audio data packet coming from a conference unit. As clock 303 is actively synchronized with the clock used in the conference unit for transmission of audio data packets, the ETA unit 323 can accurately determine the time the next audio data packet is ready for transmission at the conference unit. The ETA unit 323 increases that time with a predetermined transmission delay, i.e. an acceptable time required for interrupt handling at the transmitter and receiver side, propagation through the air over the Wi-Fi channel, and possible jitter as a result for instance of the LBT mechanism implemented at the transmitter side. The transmission delay may further account for clock synchronisation inaccuracies between clock 303 and the clock in the conference unit actively synchronized therewith. In the example of Fig. 3, the transmission delay is predetermined to correspond to 1,5 milliseconds. The locally generated clock signal and predetermined transmission delay enable the ETA unit 323 to defensively estimate the arrival time of the next audio data packet for a conference unit. A loss detection unit 324 that receives an interrupt from processor 321 upon arrival of an audio data packet verifies if an audio data packet is received by the next estimated time of arrival of an audio data packet. If an audio data packet is received in time, the processor 321 shall process the received audio data packet such that the audio samples contained therein can be output and used for downstream transmission. Each time no audio data packet is received by the estimated time of arrival of an audio data packet, the loss detection unit 324 triggers a packet concealment unit 325 that forms part of receiver 320 to generate a replacement packet and to supply the replacement packet to the processor 321 for insertion in the audio stream outputted. The packet concealment unit 325 applies processing intensive concealment algorithms, typically using earlier received audio data packets to generate a replacement audio data packet that, when inserted in the received audio stream to replace a missing audio data packet, does not generate audible artefacts. Thanks to the active clock synchronization and arrival time estimation of audio data packets, lost packet concealment can be triggered early. This enables the access point 300 to meet latency requirements set for conference systems, typically ranging between 15 milliseconds and 25 milliseconds for the round-trip time of audio packets travelling back and forth between a conference unit and access point 300.

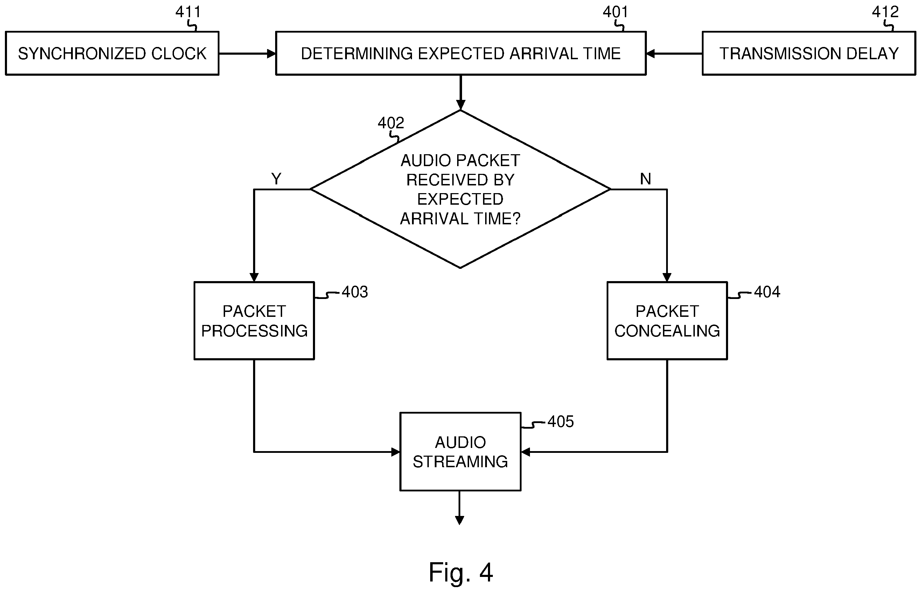

Fig. 4 represents a pseudo flow diagram illustrating an embodiment of the method for transfer of latency sensitive audio data packets according to the invention. The pseudo flow diagram of Fig. 4 illustrates the steps performed at the receiver side. In a first step 401, an expected arrival time is determined for an audio data packet from a time signal received from an actively synchronized clock 411 and an expected transmission delay 412, predetermined and recorded for instance in a computer memory or register. In a second step 402, it is verified whether an audio data packet has been received by the expected arrival time determined in the first step 401. In case an audio data packet has been received by the expected arrival time, the received audio data packet is processed normally in step 403. In case no audio data packet has been received by the expected arrival time, lost packet concealment is activated in step 404 in order to generate a replacement audio packet for the lost audio data packet. The lost packet concealment of step 404 is activated as soon as the expected arrival time is reached. At last, the processed audio from the received audio data packet or the generated audio through concealment is streamed in step 405 to form a continuous audio stream without audible artefacts.

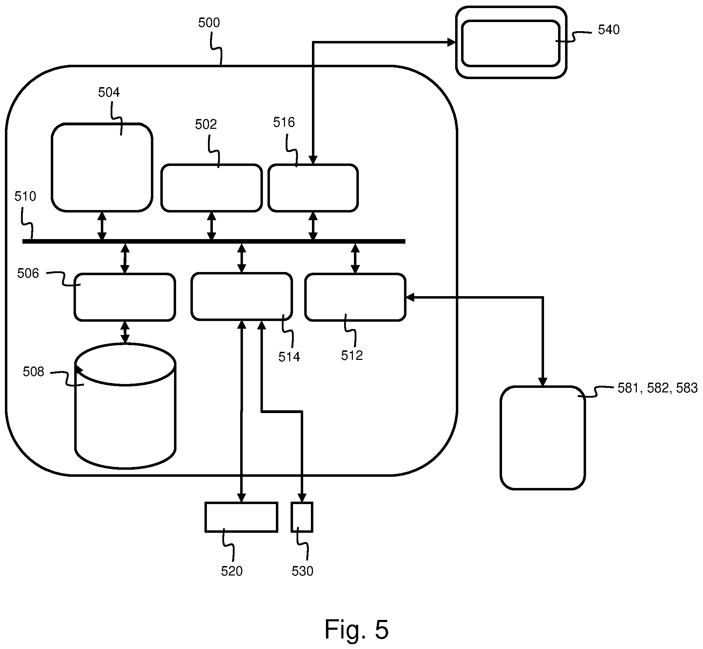

Fig. 5 shows a suitable computing system 500 enabling to perform one or several steps in embodiments of the method for transfer of latency sensitive audio data packets according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. Computing system 500 could thus correspond to the processing circuitry 211, 221 in the embodiment illustrated by Fig. 2, or the processing circuitry 311, 321 in the embodiment illustrated by Fig. 3. The processing circuitry used respectively in the transmitter and in the receiver of these embodiments may evidently from part of a single processor or computer as is indicated by the dashed rectangles in these drawings.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims.

## Claims

1. A wireless conference system (100) adapted to enable a plurality of users to participate to a conference in a conference room, said wireless conference system (100) comprising an access point (101; 300) and a plurality of conference units (111-115; 200),
- wherein said access point (101; 300) and one or more of said conference units (111-115; 200) comprise a transceiver (201; 301) configured for bi-directional, time division multiple access based or TDMA based wireless communication of latency sensitive audio data packets between said one or more conference units (111-115; 200) and said access point (101; 300), said transceiver (201; 301) comprising a transmitter (210; 310) and receiver (220; 320);
- wherein said access point (101; 300) and said one or more conference units (111-115; 200) comprise respective clocks (203; 303) that are actively synchronised, a clock (203; 303) of said respective clocks being configured to generate a local audio clock signal used locally for processing said audio data packets and a local synchronisation clock signal used for said TDMA based wireless communication;
- wherein said receiver (220; 320) comprises a packet loss detection unit (222; 322) configured to detect loss of an audio data packet transmitted from a conference unit (111-115; 200) to said access point (101; 300) or vice-versa, said packet loss detection unit (222; 322) comprising:
- means (223; 323) configured to determine an expected arrival time for said audio data packet from said local synchronisation clock signal and from a predetermined expected transmission delay, and
- means (224; 324) configured to detect that said audio data packet is lost if it has not arrived by said expected arrival time; and
- wherein said receiver (220; 320) comprises a packet loss concealment unit (225; 325) configured to generate a replacement packet for said audio data packet that is detected to be lost by said packet loss detection unit (222; 322).

2. The wireless conference system (100) according to claim 1, wherein said access point (101; 300) and said one or more conference units (111-115; 200) are configured to not acknowledge receipt of audio data packets.

3. The wireless conference system (100) according to claim 1, wherein said access point (101; 300) and said one or more conference units (101-105; 200) are configured to not retransmit a lost audio data packet.

4. The wireless conference system (100) according to one of the preceding claims, wherein said latency sensitive audio data packets have a round trip time latency limit of 25 milliseconds for wireless transfer from a conference unit (111-115; 200) to said access point (101; 300), and wireless transfer from said access point (101; 300) to said conference unit (111-115; 200).

5. The wireless conference system (100) according to one of the preceding claims, wherein said latency sensitive audio data packets have a round trip time latency limit of 15 milliseconds for wireless transfer from a conference unit (111-115; 200) to said access point (101; 300), and wireless transfer from said access point (101; 300) to said conference unit (111-115; 200).

6. The wireless conference system (100) according to one of the preceding claims, wherein said TDMA based wireless communication uses TDMA frames of 5 milliseconds.

7. The wireless conference system (100) according to one of the preceding claims, wherein said transmitter (210; 310) is configured to listen for interfering traffic within an assigned timeslot within a TDMA frame before transmitting an audio data packet therein.

8. The wireless conference system (100) according to one of the preceding claims, wherein said wireless communication uses Wi-Fi.

9. The wireless conference system (100) according to one of the preceding claims, wherein said one or more conference units (111-115; 200) comprise clock synchronization units (204), configured to actively synchronize their respective clocks (203) with a clock (303) in said access point (101; 300) based on a timestamp inserted in beacon messages regularly broadcasted by said access point (101; 300).

10. The wireless conference system (100) according to one of the preceding claims,
wherein said predetermined expected transmission delay is determined as a sum of a propagation delay, jitter, an interrupt handling delay, processing delay and clock synchronisation inaccuracy.

11. The wireless conference system (100) according to claim 7 and claim 10, wherein said jitter delay comprises a listen-before-talk jitter contribution.

12. The wireless conference system (100) according to one of the preceding claims,
wherein said predetermined expected transmission delay is set at a value between 1,5 milliseconds and 2 milliseconds.

13. A method for transfer of latency sensitive audio data packets between one or more conference units (111-115; 200) and an access point (101; 300) in a wireless conference system (100) adapted to enable a plurality of users to participate to a conference in a conference room, said method for transfer comprising bi-directional, time division multiple access based or TDMA based wireless communication of said audio data packets, said method further comprising:
- actively synchronizing respective clocks (203; 303) in said one or more conference units (111-115; 200) and said access point (101; 300), a clock (203; 303) of said respective clocks being configured to generate a local audio clock signal used locally for processing said audio data packets and a local synchronisation clock signal used for said TDMA based wireless communication;
- detecting loss of an audio data packet transmitted from a conference unit (111-115; 200) to said access point (101; 300) or vice-versa, comprising:
- determining an expected arrival time for said audio data packet from said local synchronisation clock signal and from a predetermined expected transmission delay; and
- detecting that said audio data packet is lost if it has not arrived by said expected arrival time; and
- generating a replacement packet for said audio data packet that is detected to be lost through packet loss concealment.

## Patentansprüche

1. Drahtloses Konferenzsystem (100), das angepasst ist, um einer Vielzahl von Nutzern zu ermöglichen, an einer Konferenz in einem Konferenzraum teilzunehmen, das drahtlose Konferenzsystem (100) umfassend einen Zugangspunkt (101; 300) und eine Vielzahl von Konferenzeinheiten (111-115; 200),
- wobei der Zugangspunkt (101; 300) und eine oder mehrere der Konferenzeinheiten (111-115; 200) einen Sendeempfänger (201; 301) umfassen, der für eine bidirektionale, auf zeitgesteuertem Mehrfachzugriffsverfahren oder TDMA basierende drahtlose Kommunikation von latenzempfindlichen Audiodatenpaketen zwischen der einen oder den mehreren Konferenzeinheiten (111-115; 200) und dem Zugangspunkt (101; 300) konfiguriert ist, der Sendeempfänger (201; 301) umfassend einen Sender (210; 310) und einen Empfänger (220; 320);
- wobei der Zugangspunkt (101; 300) und die eine oder die mehreren Konferenzeinheiten (111-115; 200) jeweilige Taktgeber (203; 303) umfassen, die aktiv synchronisiert sind, wobei ein Taktgeber (203; 303) der jeweiligen Taktgeber konfiguriert ist, um ein lokales Audiotaktsignal, das lokal zur Verarbeitung der Audiodatenpakete verwendet wird, und ein lokales Synchronisationstaktsignal, das für die TDMA-basierte drahtlose Kommunikation verwendet wird, zu erzeugen;
- wobei der Empfänger (220; 320) eine Paketverlust-Erkennungseinheit (222; 322) umfasst, die konfiguriert ist, um den Verlust eines Audiodatenpakets zu erkennen, das von einer Konferenzeinheit (111-115; 200) zu dem Zugangspunkt (101; 300) oder umgekehrt übertragen wird, die Paketverlust-Erkennungseinheit (222; 322) umfassend:
- Einrichtungen (223; 323), die konfiguriert sind, um eine erwartete Ankunftszeit für das Audiodatenpaket aus dem lokalen Synchronisationstaktsignal und aus einer vorbestimmten erwarteten Übertragungsverzögerung zu bestimmen, und
- Einrichtungen (224; 324), die konfiguriert sind, um zu erkennen, dass das Audiodatenpaket verloren gegangen ist, wenn es nicht zur erwarteten Ankunftszeit angekommen ist; und
- wobei der Empfänger (220; 320) eine Paketverlust-Verbergungseinheit (225; 325) umfasst, die konfiguriert ist, um ein Ersatzpaket für das Audiodatenpaket zu erzeugen, das von der Paketverlust-Erkennungseinheit (222; 322) als verloren erkannt wird.

2. Drahtloses Konferenzsystem (100) nach Anspruch 1, wobei der Zugangspunkt (101; 300) und die eine oder die mehreren Konferenzeinheiten (111-115; 200) konfiguriert sind, um einen Empfang von Audiodatenpaketen nicht zu bestätigen.

3. Drahtloses Konferenzsystem (100) nach Anspruch 1, wobei der Zugangspunkt (101; 300) und die eine oder die mehreren Konferenzeinheiten (101-105; 200) konfiguriert sind, um ein verlorenes Audiodatenpaket nicht erneut zu übertragen.

4. Drahtloses Konferenzsystem (100) nach einem der vorherigen Ansprüche, wobei die latenzempfindlichen Audiodatenpakete eine Umlaufzeit-Latenzgrenze von 25 Millisekunden für eine drahtlose Übertragung von einer Konferenzeinheit (111-115; 200) zu dem Zugangspunkt (101; 300) und eine drahtlose Übertragung von dem Zugangspunkt (101; 300) zu der Konferenzeinheit (111-115; 200) aufweisen.

5. Drahtloses Konferenzsystem (100) nach einem der vorherigen Ansprüche, wobei die latenzempfindlichen Audiodatenpakete eine Umlaufzeit-Latenzgrenze von 15 Millisekunden für eine drahtlose Übertragung von einer Konferenzeinheit (111-115; 200) zu dem Zugangspunkt (101; 300) und eine drahtlose Übertragung von dem Zugangspunkt (101; 300) zu der Konferenzeinheit (111-115; 200) aufweisen.

6. Drahtloses Konferenzsystem (100) nach einem der vorherigen Ansprüche, wobei die TDMA-basierte drahtlose Kommunikation TDMA-Frames von 5 Millisekunden verwendet.

7. Drahtloses Konferenzsystem (100) nach einem der vorherigen Ansprüche, wobei der Sender (210; 310) konfiguriert ist, um innerhalb eines zugewiesenen Zeitschlitzes innerhalb eines TDMA-Frames auf störenden Verkehr zu horchen, bevor er ein Audiodatenpaket darin sendet.

8. Drahtloses Konferenzsystem (100) nach einem der vorherigen Ansprüche, wobei die drahtlose Kommunikation WLAN verwendet.

9. Drahtloses Konferenzsystem (100) nach einem der vorherigen Ansprüche, wobei die eine oder die mehreren Konferenzeinheiten (111-115; 200) Taktsynchronisationseinheiten (204) umfassen, die konfiguriert sind, um ihre jeweiligen Takte (203) aktiv mit einem Takt (303) in dem Zugangspunkt (101; 300) basierend auf einem Zeitstempel zu synchronisieren, der in Baken-Nachrichten eingefügt ist, die regelmäßig von dem Zugangspunkt (101; 300) gesendet werden.

10. Drahtloses Konferenzsystem (100) nach einem der vorherigen Ansprüche,
wobei die vorbestimmte erwartete Übertragungsverzögerung als Summe einer Ausbreitungsverzögerung, eines Jitters, einer Unterbrechungsbearbeitungsverzögerung, einer Verarbeitungsverzögerung und einer Taktsynchronisationsungenauigkeit bestimmt wird.

11. Drahtloses Konferenzsystem (100) nach Anspruch 7 und Anspruch 10, wobei die Jitter-Verzögerung einen Jitter-Beitrag Hören vor Sprechen umfasst.

12. Drahtloses Konferenzsystem (100) nach einem der vorherigen Ansprüche,
wobei die vorbestimmte erwartete Übertragungsverzögerung auf einen Wert zwischen 1,5 Millisekunden und 2 Millisekunden eingestellt ist.

13. Verfahren zum Übertragen von latenzempfindlichen Audiodatenpaketen zwischen einer oder mehreren Konferenzeinheiten (111-115; 200) und einem Zugangspunkt (101; 300) in einem drahtlosen Konferenzsystem (100), das angepasst ist, einer Vielzahl von Nutzern zu ermöglichen, an einer Konferenz in einem Konferenzraum teilzunehmen, das Verfahren zum Übertragen umfassend eine bidirektionale, auf zeitgesteuertem Mehrfachzugriffsverfahren oder TDMA basierende drahtlose Kommunikation von latenzempfindlichen Audiodatenpaketen, das Verfahren ferner umfassend:
- aktives Synchronisieren jeweiliger Taktgeber (203; 303) in der einen oder den mehreren Konferenzeinheiten (111-115; 200) und dem Zugangspunkt (101; 300), wobei ein Taktgeber (203; 303) der jeweiligen Taktgeber konfiguriert ist, um ein lokales Audiotaktsignal zu erzeugen, das lokal zum Verarbeiten der Audiodatenpakete verwendet wird, und ein lokales Synchronisationstaktsignal, das für die TDMA-basierte drahtlose Kommunikation verwendet wird;
- Erkennen eines Verlusts eines Audiodatenpakets, das von einer Konferenzeinheit (111-115; 200) zu dem Zugangspunkt (101; 300) oder umgekehrt übertragen wird, umfassend:
- Bestimmen einer erwarteten Ankunftszeit für das Audiodatenpaket aus dem lokalen Synchronisationstaktsignal und aus einer vorbestimmten erwarteten Übertragungsverzögerung, und
- Erkennen, dass das Audiodatenpaket verloren gegangen ist, wenn es nicht zur erwarteten Ankunftszeit angekommen ist; und
- Erzeugen eines Ersatzpakets für das Audiodatenpaket, dessen Verlust durch Verbergen des Paketverlusts erkannt wurde.

## Revendications

1. Système de conférence sans fil (100) adapté pour permettre à une pluralité d'utilisateurs de participer à une conférence dans une salle de conférence, ledit système de conférence sans fil (100) comprenant un point d'accès (101 ; 300) et une pluralité d'unités de conférence (111-115 ; 200),
- ledit point d'accès (101 ; 300) et une ou plusieurs desdites unités de conférence (111-115 ; 200) comprenant un émetteur-récepteur (201 ; 301) configuré pour une communication sans fil bidirectionnelle basée sur un accès multiple par répartition temporelle ou basée sur TDMA de paquets de données audio sensibles à la latence entre ladite ou lesdites unités de conférence (111-115 ; 200) et ledit point d'accès (101 ; 300), ledit émetteur-récepteur (201 ; 301) comprenant un émetteur (210 ; 310) et un récepteur (220 ; 320) ;
- ledit point d'accès (101 ; 300) et ladite ou lesdites unités de conférence (111-115 ; 200) comprenant des horloges respectives (203 ; 303) qui sont activement synchronisées, une horloge (203 ; 303) desdites horloges respectives étant configurée pour générer un signal d'horloge audio local utilisé localement pour traiter lesdits paquets de données audio et un signal d'horloge de synchronisation locale utilisé pour ladite communication sans fil basée sur TDMA ;
- ledit récepteur (220 ; 320) comprenant une unité de détection de perte de paquets (222 ; 322) configurée pour détecter la perte d'un paquet de données audio émis à partir d'une unité de conférence (111-115 ; 200) vers ledit point d'accès (101 ; 300) ou vice-versa, ladite unité de détection de perte de paquets (222 ; 322) comprenant :
- des moyens (223 ; 323) configurés pour déterminer un temps d'arrivée attendu dudit paquet de données audio à partir dudit signal d'horloge de synchronisation locale et d'un retard d'émission attendu prédéfini, et
- des moyens (224 ; 324) configurés pour détecter que ledit paquet de données audio est perdu s'il n'est pas arrivé audit temps d'arrivée attendu ; et
- ledit récepteur (220 ; 320) comprenant une unité de dissimulation de perte de paquets (225 ; 325) configurée pour générer un paquet de remplacement pour ledit paquet de données audio qui est détecté comme étant perdu par ladite unité de détection de perte de paquets (222 ; 322).

2. Système de conférence sans fil (100) selon la revendication 1, ledit point d'accès (101 ; 300) et ladite ou lesdites unités de conférence (111-115 ; 200) étant configurés pour ne pas accuser réception de paquets de données audio.

3. Système de conférence sans fil (100) selon la revendication 1, ledit point d'accès (101 ; 300) et ladite ou lesdites unités de conférence (101-105 ; 200) étant configurés pour ne pas émettre de nouveau un paquet de données audio perdu.

4. Système de conférence sans fil (100) selon l'une des revendications précédentes, lesdits paquets de données audio sensibles à la latence comportant une limite de latence de temps d'aller-retour de 25 millisecondes pour un transfert sans fil d'une unité de conférence (111-115 ; 200) audit point d'accès (101 ; 300), et un transfert sans fil dudit point d'accès (101 ; 300) à ladite unité de conférence (111-115 ; 200).

5. Système de conférence sans fil (100) selon l'une des revendications précédentes, lesdits paquets de données audio sensibles à la latence comportant une limite de latence de temps d'aller-retour de 15 millisecondes pour un transfert sans fil d'une unité de conférence (111-115 ; 200) audit point d'accès (101 ; 300), et un transfert sans fil dudit point d'accès (101 ; 300) à ladite unité de conférence (111-115 ; 200).

6. Système de conférence sans fil (100) selon l'une des revendications précédentes, ladite communication sans fil basée sur TDMA utilisant des trames TDMA de 5 millisecondes.

7. Système de conférence sans fil (100) selon l'une des revendications précédentes, ledit émetteur (210 ; 310) étant configuré pour écouter le trafic interférant dans un intervalle de temps attribué dans une trame TDMA avant d'émettre un paquet de données audio dans celui-ci.

8. Système de conférence sans fil (100) selon l'une des revendications précédentes, ladite communication sans fil utilisant le Wi-Fi.

9. Système de conférence sans fil (100) selon l'une des revendications précédentes, ladite ou lesdites unités de conférence (111-115 ; 200) comprenant des unités de synchronisation d'horloge (204), configurées pour synchroniser activement leurs horloges respectives (203) avec une horloge (303) dans ledit point d'accès (101 ; 300) sur la base d'un horodatage inséré dans des messages balises régulièrement diffusés par ledit point d'accès (101 ; 300).

10. Système de conférence sans fil (100) selon l'une des revendications précédentes,
ledit retard de transmission attendu prédéfini étant déterminé sous la forme d'une somme d'un retard de propagation, d'une gigue, d'un retard de gestion d'interruption, d'un retard de traitement et d'une imprécision de synchronisation d'horloge.

11. Système de conférence sans fil (100) selon la revendication 7 et la revendication 10, ledit retard de gigue comprenant une contribution de gigue d'écoute avant conversation.

12. Système de conférence sans fil (100) selon l'une des revendications précédentes,
ledit retard de transmission attendu prédéfini étant fixé à une valeur comprise entre 1,5 millisecondes et 2 millisecondes.

13. Procédé permettant le transfert de paquets de données audio sensibles à la latence entre une ou plusieurs unités de conférence (111-115 ; 200) et un point d'accès (101 ; 300) dans un système de conférence sans fil (100) adapté pour permettre à une pluralité d'utilisateurs de participer à une conférence dans une salle de conférence, ledit procédé permettant le transfert comprenant une communication sans fil bidirectionnelle basée sur un accès multiple par répartition temporelle ou basée sur TDMA desdits paquets de données audio, ledit procédé comprenant en outre :
- la synchronisation active des horloges respectives (203 ; 303) dans ladite ou lesdites unités de conférence (111-115 ; 200) et ledit point d'accès (101 ; 300), une horloge (203 ; 303) desdites horloges respectives étant configurée pour générer un signal d'horloge audio local utilisé localement pour traiter lesdits paquets de données audio et un signal d'horloge de synchronisation locale utilisé pour ladite communication sans fil basée sur TDMA ;
- la détection de la perte d'un paquet de données audio émis à partir d'une unité de conférence (111-115 ; 200) vers ledit point d'accès (101 ; 300) ou vice-versa, comprenant :
- la détermination d'un temps d'arrivée attendu pour ledit paquet de données audio à partir dudit signal d'horloge de synchronisation locale et à partir d'un retard d'émission attendu
prédéfini ; et
- la détection que ledit paquet de données audio est perdu s'il n'est pas arrivé au temps d'arrivée attendu ; et
- la génération d'un paquet de remplacement pour ledit paquet de données audio qui est détecté comme étant perdu par dissimulation de perte de paquets.
